Europäisches Patentamt

European Patent Office

Office européen des brevets

(19)

(11) Veröffentlichungsnummer: **0 014 820**
**B1**

(12) EUROPÄISCHE PATENTSCHRIFT

(45) Veröffentlichungstag der Patentschrift: 01.06.83

(51) Int. Cl.³: **G 01 N 29/04,**
**G 01 N 29/00, B 23 K 33/00**

(21) Anmeldenummer: 79890055.1

(22) Anmeldetag: 05.12.79

(54) Verfahren zur Ultraschallprüfung von Schweissnähten austenitischer Stähle, und Verfahren zur Herstellung von zur Durchführung dieses Prüfungsverfahrens geeigneten Schweissnähten.

(30) Priorität: 08.01.79 AT 115/79

(43) Veröffentlichungstag der Anmeldung:
03.09.80 Patentblatt 80/18

(45) Bekanntmachung des Hinweises auf die Patenterteilung:
01.06.83 Patentblatt 83/22

(84) Benannte Vertragsstaaten:
BE CH DE FR GB IT LU NL SE

(56) Entgegenhaltungen:
DE - A - 2 425 724

SCHWEISSEN UND SCHNEIDEN, Jahrgang 25,
April 1973, Düsseldorf, H.—D. STEFFENS, U.
ECHTERHOFF "Möglichkeiten der
Ultraschallprüfung von austenitischen Stählen"
Seiten 142 bis 145
J. KRAUTKRÄMER, H. KRAUTKRÄMER
"Werkstoffprüfung mit Ultraschall", 2. Auflage,
1966 SPRINGER VERLAG, Berlin, Heidelberg,
New York Seiten 88, 89, 238—240

(73) Patentinhaber: VOEST-ALPINE Aktiengesellschaft
Werksgelände
A-4010 Linz (AT)
(73) Patentinhaber: Krautkrämer GmbH
Luxemburger Strasse 449
D-5000 Köln 41 (DE)

(72) Erfinder: Ganglbauer, Otto
Uppsalaweg 12
A-4040 Linz (AT)
Erfinder: Wallner, Felix, Dipl.-Ing. Dr.
Voltastrasse 42
A-4045 Linz (AT)
Erfinder: Scheidl, Helmut, Dipl.-Ing.
Ammeringstrasse 3
A-4910 Ried (AT)
Erfinder: Reindl, Hermann
Sperlstrasse 8
A-4040 Linz (AT)
Erfinder: Frielinghaus, Rainer, Dr.-Ing.
Herrenkreuzweg 17
D-5305 Bornheim-Merten (DE)

(74) Vertreter: Hübscher, Gerhard, Dipl.-Ing. et al,
Patentanwälte Dipl.-Ing. Gerhard Hübscher Dipl.-
Ing. Helmut Hübscher Dipl.-Ing. Heiner Hübscher
Spittelwiese 7
A-4020 Linz (AT)

(56) Entgegenhaltungen:
J. KRAUTKRÄMER, H. KRAUTKRÄMER
"Werkstoffprüfung mit Ultraschall", 2. Auflage,
1966 SPRINGER VERLAG, Berlin, Heidelberg,
New York Seiten 372—378
SCHWEISSTECHNIK, 32, Jahrgang, Juli 1978,
Wien "Ultraschallprüfung austenitischer
Schweissnähte" Seite 142.

## Verfahren zur Ultraschallprüfung von Schweissnähten austenitischer Stähle, und Verfahren zur Herstellung von zur Durchführung dieses Prüfungsverfahrens geeigneten Schweissnähten

Die Erfindung bezieht sich auf ein Verfahren zur Ultraschallprüfung von Schweißnähten austenitischer Stähle deren Verbundgrenzfläche bis auf eine Welligkeit eben verläuft, wobei die Schallwellen, vorzugsweise Longitudinalwellen, schräg eingeschallt und die Echohöhen zur Abschätzung der Größe und Art des Reflektors bestimmt werden, und auf eine Schweißnaht zur Durchführung des Verfahrens.

Die Prüfung von Schweißnähten durch Schrägeinschallung von Transversalwellen ergibt zwar eine hohe Nachweisempfindlichkeit für Fehler in Schweißnähten aus ferritischem Stahl, nicht aber für Fehler in austenitischen Schweißnähten, weil die Prüfung austenitischer Nähte mit Transversalwellen durch hohe Störanzeigen vom gröberen Gefüge der Schweißnaht behindert wird, so daß im allgemeinen selbst größere Fehler nicht nachgewiesen werden können. Eine wesentliche Verbesserung bei der Ultraschallprüfung von austenitischen Schweißverbindungen wurde durch die Schrägeinschallung von Longitudinalwellen erzielt, wobei durch die Verwendung besonderer Prüfköpfe und geeigneter akustischer Wandler das Signal-Rauschverhältnis der Echohöhen weiter verbessert werden konnte. Mit Hilfe dieser besonderen Prüfköpfe konnte die Nachweisempfindlichkeit für Fehler in austenitischen Schweißnähten wesentlich vergrößert werden. Eine Beurteilung der Echohöhen in bezug auf die Fehlergröße und Fehlerart war jedoch nicht möglich, weil die aufgefangenen Echohöhen weitgehend unabhängig von der Größe und Art des Reflektors sind.

Der Erfindung liegt demnach die Aufgabe zugrunde, diese Mängel zu vermeiden und ein Verfahren zur Ultraschallprüfung von Schweißnähten der eingangs geschilderten Art so zu verbessern, daß eine entsprechende Abhängigkeit zwischen den Echohöhen und der Art und Größe des Reflektors sichergestellt wird.

Die Erfindung löst diese Aufgabe dadurch, daß die Prüffrequenz niedriger als eine von der Welligkeit der Verbundgrenzfläche zwischen Grundwerkstoff und Schweißgut abhängige Grenzfrequenz gewählt wird, die durch eine der größten Wellentiefe der Verbundgrenzfläche entsprechende Wellenlänge der Schallwellen im Grundwerkstoff bestimmt ist. Die Erfindung bezieht sich auch auf Verfahren zur Herstellung einer Tulpenschweißnaht nach dem Anspruch 3 und einer X—Schweißnaht nach dem Anspruch 4.

Die Erfindung baut auf der Erkenntnis auf, daß die Schallwellen zufolge der unterschiedlichen Schallgeschwindigkeiten im Grundwerkstoff und im Schweißgut eine Brechung erfahren müssen. Auf Grund dieser Brechung werden die Schallstrahlen bei der nicht zu vermeidenden Welligkeit der Verbundgrenzfläche entsprechend ihren Auftreffwinkeln in unterschiedliche Richtungen abgelenkt, was zu Interferenzerscheinungen und in weiterer Folge zu teilweise erheblichen Amplitudenänderungen gegenüber einer ungestörten Schallausbreitung führt. Es hat sich nun überraschenderweise gezeigt, daß der zur Amplitudenverfälschung führende Interferenzeinfluß auf ein nicht störendes Maß herabgesetzt werden kann, wenn die Wellenlänge der Schallwellen die maximale Wellentiefe der Welligkeit der Verbundgrenzfläche übersteigt. Durch die Wahl einer entsprechenden Prüffrequenz, die unterhalb der durch die Wellentiefe bestimmten Grenzfrequenz liegt, kann somit die gewünschte Abhängigkeit zwischen den Echohöhen und der Größe und Art des Reflektors erreicht werden. Da die Prüfköpfe auf die Schallgeschwindigkeit im Grundwerkstoff abgestimmt sind, wird die zur Erreichung des angestrebten Effektes vorgegebene obere Grenzfrequenz auf die Wellenlänge der Schallwellen im Grundwerkstoff bezogen, obwohl streng genommen die Wellenlänge der Schallwellen im Bereich der Verbundgrenzfläche bzw. des Schweißgutes hiefür maßgebend ist. Die Schallgeschwindigkeit dieses Grenzbereiches sowie des Schweißgutes sind jedoch im allgemeinen nicht bekannt. Der dadurch in Kauf genommene Fehler bei der Ermittlung der Grenzfrequenz ist jedoch so gering, daß in der Praxis dieser Fehler vernachlässigt werden kann.

Das störende Auftreten von die Echohöhen spürbar beeinflussenden Interferenzerscheinungen erste bei einer der Wellentiefe der Verbundgrenzflächen entsprechenden Schallwellenlänge ist wohl darauf zurückzuführen, daß nicht einzelne Schallstrahlen, sondern Strahlenbündel vorliegen, die die Interferenzerscheinungen nicht im einzelnen, sondern nur in der Summenwirkung erkennen lassen. Trotzdem wird mit einer Vergrößerung der Schallwellenlänge, also einer Herabsetzung der Frequenz der Schallwellen der Einfluß der Interferenz selbstverständlich weiter vermindert, so daß besonders günstige Verhältnisse erhalten werden, wenn die Prüffrequenz kleiner als die halbe Grenzfrequenz gewählt wird. Der Herabsetzung der Prüffrequenz sind aber durch das gewünschte, von der Wellenlänge des Schallbündels abhängige Auflösungsvermögen Grenzen gesetzt.

Um bei entsprechend hohen Prüffrequenzen arbeiten zu können, muß die Welligkeit der Verbundgrenzfläche beschränkt bleiben, wobei es selbstverständlich nur auf die Welligkeit im Bereich des Schallbündels ankommt. Damit nun übliche Prüffrequenzen sichergestellt werden können, sollen die Schweißnähte zur Durchführung des Verfahrens so ausgestaltet sein, daß die Verbundgrenzflächen zwischen Grundwerkstoff und Schweißgut bis auf eine Welligkeit eben verläuft, deren größte Wellentiefe höchstens der sich bei üblichen Prüffrequenzen im Grundwerkstoff ergebenden Wellenlängen der Schallwellen entspricht. Zur Erreichung einer im wesentlichen ebenen Verbundgrenzfläche wird zur Herstellung einer Tulpennaht der Wurzelbereich der Naht bis zur vollständigen Entfernung der ursprünglichen Stege ausgeräumt. Zur Herstellung einer X—Naht werden an den eben verlaufenden Stirnflächen des Grundwerkstoffes die erforderlichen Stege durch Auftragsschweißungen gebildet. Diese Auftragsschweißungen haben keinen Einfluß auf die Interferenzerscheinungen, da sie sich akustisch gleich dem Schweiß gut verhalten.

In der Zeichnung ist der Erfindungsgegenstand beispielsweise dargestellt. Es zeigen

Fig. 1 die grundsätzlichen Brechungsverhältnisse der Schallstrahlen an einer Verbundgrenzfläche zwischen einem Grundmaterial und einem Schweißgut im schematischen Schnitt,

Fig. 2 die Ausbildung einer erfindungsgemäßen Tulpenschweißnaht und

Fig. 3 die Ausbildung einer X—Schweißnaht nach der Erfindung.

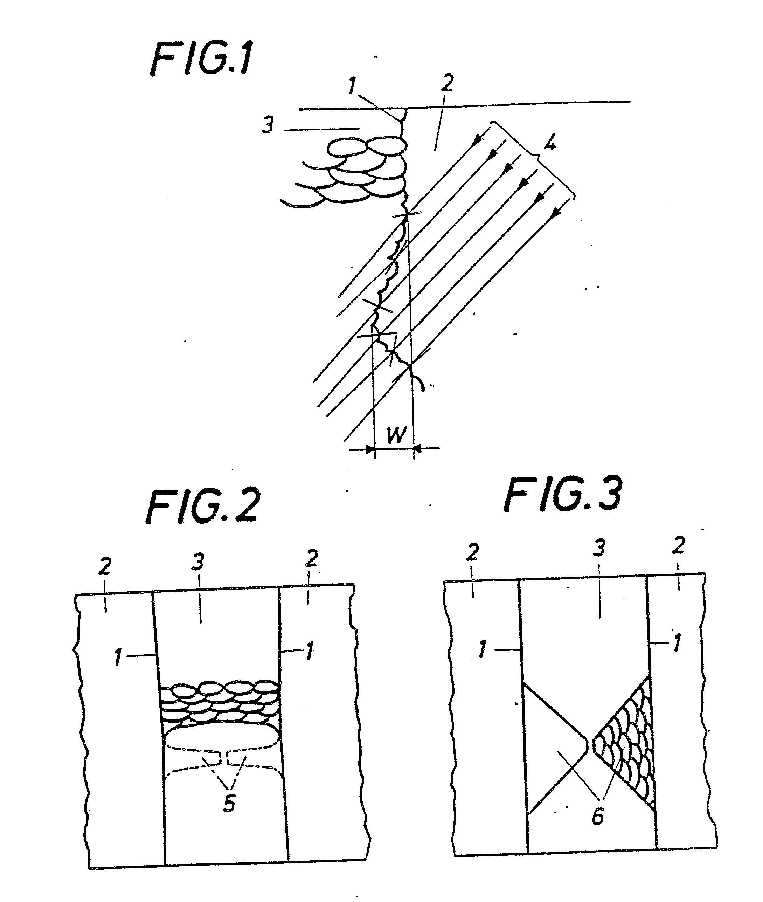

Wie aus Fig. 1 ersichtlich ist, zeigt die Verbundgrenzfläche 1 zwischen dem Grundwerkstoff 2 und dem Schweißgut 3 einer Schweißnaht nicht nur die grundsätzliche Nahtform, sondern weist auch eine aus den Einbränden der einzelnen Schweißlagen herrührende Welligkeit auf, so daß das schräg eingeschaltte Schallbündel 4 an der Verbundgrenzfläche 1 wegen der unterschiedlichen Schallgeschwindigkeiten im Grundwerkstoff 2 und im Schweißgut 3 eine Brechung erfährt. Diese Brechung ist an einzelnen Schallstrahlen in Fig. 1 schematisch angedeutet. Daraus ist zu ersehen, daß die einzelnen Schallstrahlen auf Grund der Welligkeit und des nicht ebenen Verlaufs der Verbundgrenzfläche 1 die Schallstrahlen entsprechend dem Auftreffwinkel auf die Verbundgrenzfläche in unterschiedliche Richtungen abgelenkt werden, was zu einer Interferenz der Strahlen führt. Durch die Interferenzerscheinungen werden die Amplituden der Schallstrahlen verändert, so daß auch das vom eingeschallten Schall empfangene Echo eine Höhe aufweist, die nicht nur von der Größe und Art des Reflektors, sondern auch von den Interferenzerscheinungen abhängt. Treten stärkere Interferenzerscheinungen auf, so kann, da diese Interferenzerscheinungen bei der Prüfung nicht abgeschätzt werden können, auf Grund der Echohöhen nicht auf die Art und Größe des Reflektors geschlossen werden.

Der störende Einfluß der Interferenz kann jedoch umgangen werden, wenn die Wellenlänge des Schallbündels 4 in Abhängigkeit von der Welligkeit der Verbundgrenzfläche 1 gewählt wird. Durch die im Bereich des Schallbündels 4 vorhandene größte Wellentiefe $W$ der Verbundgrenzfläche 1 kann nämlich eine obere Grenzfrequenz für die Prüffrequenz bestimmt werden. Ist die Wellentiefe $W$ der Verbundgrenzfläche 1 kleiner als die Wellenlänge der Schallwellen, vorzugsweise kleiner als die doppelte Schallwellenlänge, so ist der Störeinfluß der Interferenzerscheinungen unbeachtlich, so daß aus den Echohöhen auf die Art und Größe des Reflektors geschlossen werden kann. Da über die materialabhängige Schallgeschwindigkeit eine unmittelbare Beziehung zwischen der Schallfrequenz und der Wellenlänge gegeben ist, bestimmt die größte Wellentiefe $W$ eine obere Grenzfrequenz für die Prüffrequenz. Wegen der Materialabhängigkeit der Schallgeschwindigkeit wird dabei die Wellenlänge auf den Grundwerkstoff 2 bezogen, weil im allgemeinen die Schallgeschwindigkeit im Grundwerkstoff bekannt ist, nicht aber die an sich maßgebende Schallgeschwindigkeit im Bereich der Verbundgrenzfläche oder im Schweißgut. Der damit verbundene Fehler fällt jedoch nicht ins Gewicht, insbesondere dann nicht, wenn man unter der oberen Grenzfrequenz bleibt.

Um mit üblichen Prüffrequenzen arbeiten zu können, muß die Welligkeit der Verbundgrenzfläche 1 entsprechend klein ausfallen. Dies kann durch möglichst ebene Verbundgrenzflächen und die Wahl entsprechender Schweißparameter erreicht werden. Fig. 2 zeigt die Ausbildung einer Tulpennaht, die für die Prüfung mit Ultraschall besonders geeignet ist, weil eben die Verbundgrenzflächen 1 bis auf eine Welligkeit eben verlaufen, deren größte Wellentiefe höchstens der sich bei üblichen Prüffrequenzen ergebenden Wellenlängen der Schallwellen entspricht. Zur Erreichung solcher Verbundgrenzflächen 1 wird gemäß Fig. 2 der Wurzelbereich bis zur vollständigen Entfernung der ursprünglichen Stege 5 ausgeräumt, so daß die sonst übliche Einschnürung der Verbundgrenzflächen vermieden wird.

Zur Herstellung einer X-Naht werden gemäß Fig. 3 an den eben verlaufenden Stirnflächen des Grundwerkstoffes 2 Auftragsschweißungen 6 vorgenommen, die die erforderlichen Stege zur Bildung der Schweißnaht ergeben. Diese Auftragsschweißungen 6 haben keinen Einfluß auf die Interferenzerscheinungen, wenn sie sich akustisch gleich wie das übrige Schweißgut verhalten. Solche Auftragsschweißungen sind selbstverständlich auch für andere Nahtformen möglich.

Da es nur auf die größte Wellentiefe $W$ im Bereich des Schallbündels 4 ankommt, müssen die Verbundgrenzflächen geometrisch nicht eben verlaufen. Jede Krümmung innerhalb der durch die obere Grenzfrequenz bestimmten maximalen Wellentiefe ist selbstverständlich zulässig. Das erfindungsgemäße Wählen der Prüffrequenz in Abhängigkeit von der Welligkeit der Verbundgrenzfläche kann überall dort erfolgreich eingesetzt werden, wo es auf Grund unterschiedlicher Schallgeschwindigkeiten an der Verbundgrenzfläche zu Brechungen des Schallbündels und damit zu Interferenzerscheinungen kommt, die die Schallamplituden und damit die Echohöhen verfälschen, wodurch sich eine Fehlbewertung des Reflektors ergeben kann.

## Patentansprüche

1. Verfahren zur Ultraschallprüfung von Schweißnähten austenitischer Stähle, deren Verbundgrenzfläche bis auf eine Welligkeit eben verläuft, wobei die Schallwellen, vorzugsweise Longitudinalwellen, schräg eingeschallt und die Echohöhen zur Abschätzung der Größe und Art des Reflektors bestimmt werden, dadurch gekennzeichnet, daß die Prüffrequenz niedriger als eine von der Welligkeit der Verbundgrenzfläche zwischen Grundwerkstoff und Schweißgut abhängige Grenzfrequenz gewählt wird, die durch eine der größten Wellentiefe der Verbundgrenzfläche entsprechende Wellenlänge der Schallwellen im Grundwerkstoff bestimmt ist.

2. Verfahren nach Anspruch 1, dadurch gekennzeichnet, daß die Prüffrequenz kleiner als die halbe Grenzfrequenz gewählt wird.

3. Verfahren zur Herstellung einer zur Ultraschallprüfung nach Anspruch 1 oder 2 geeigneten Tulpenschweißnaht, dadurch gekennzeichnet, daß zur Erreichung einer im wesentlichen ebenen Verbundgrenzfläche der Wurzelbereich der Naht bis zur vollständigen Entfernung der ursprünglichen Stege ausgeräumt wird.

4. Verfahren zur Herstellung einer zur Ultraschallprüfung nach Anspruch 1 oder 2 geeigneten X-Schweißnaht, dadurch gekennzeichnet, daß an den eben verlaufenden Stirnflächen des Grundwerkstoffes die erforderlichen Stege durch Auftragsschweißungen gebildet werden.

## Revendications

1. Procédé de contrôle par ultrasons de joints soudés des aciers austénitiques dont la surface limite d'assemblage est plane à l'exception d'une ondulation, les ondes sonores, de préférence des ondes longitudinales, étant introduites obliquement et les hauteurs d'écho étant déterminées pour estimer la grandeur et la nature du réflecteur, procédé caractérisé par le fait que l'on choisit la fréquence de contrôle inférieure à une fréquence limite qui dépend de l'ondulation de la surface limite d'assemblage entre le matériau de base et le métal d'apport et qui est déterminée par une longueur d'onde des ondes sonores, dans le matériau de base, qui correspond à la plus grande profondeur d'ondulation de la surface limite d'assemblage.

2. Procédé selon la revendication 1, caractérisé par le fait que l'on choisit la fréquence de contrôle inférieure à la moitié de la fréquence.

3. Procédé de réalisation d'un joint soudé en tulipe convenant au contrôle par ultrasons selon l'une des revendications 1 et 2, caractérisé par le fait que pour obtenir une surface limite d'assemblage pratiquement plane, on dégage la région de fond du joint jusqu'à l'élimination complète des talons primitifs.

4. Procédé de réalisation d'un joint soudé en X convenant au contrôle par ultrasons selon l'une des revendications 1 et 2, caractérisé par le fait que sur les surfaces frontales planes du matériau de base, on forme les talons nécessaires par des soudages de rechargement.

## Claims

1. A method for the ultrasonic testing of austenitic steel seam welds having a base material-weld material interface which is flat except for a waviness, wherein the sound waves, particularly longitudinal sound waves, are introduced in an oblique direction and the magnitudes of the echoes are ascertained for an estimate of the size and nature of the reflector, characterized in that the testing frequency is selected below a frequency limit, which depends on the waviness of the interface between the base material and the weld and is determined by a wavelength of the sound waves in the base material, which wavelength corresponds to the largest depth of the waves of the base material-weld material interface.

2. A method according to claim 1, characterized in that the testing frequency is selected to be lower than one-half the frequency limit.

3. A method of forming a bell seam weld which is adapted to be ultrasonically tested in accordance with claim 1 or 2, characterized in that the root portion of the seam is removed so that the originally present lands are removed and a substantially planar base material-weld material interface is obtained.

4. A method of forming an X-shaped seam weld which is adapted to be ultrasonically tested in accordance with claim 1 or 2, characterized in that the lands required on the planar end faces of the base material are formed by deposition welding.

# FIG.1

1  2

3

4

W

# FIG.2

2  3  2

1  1

5

# FIG.3

2  3  2

1  1

6